# EUROPEAN PATENT APPLICATION

(11) **EP 2 333 311 A1**
(43) Date of publication of application: **15.06.2011**
(21) Application number: 09015427.9
(22) Date of filing: 14.12.2009
(51) Int. Cl.: F03B 13/26

(54) **Structure for the exploitation of tidal energy**

(71) Applicant: Nute, Ernest Rooney, Truro Cornwall TR3 1ET (GB)
(72) Inventor: Nute, Ernest Rooney, Truro Cornwall TR3 1ET (GB)

(57) **Abstract**

Water powered turbine assembly to generate a constant and controllable supply of electricity by the use of a coastal sea defence structure utilizing the motive power contained within the rising and the dropping of tidal flows.
The structure (A) able to allow sea water during a rising (5) tide to enter via baffle/filter box (1) through inlet/outlet duct (10) into generating chambers (2) and driving water turbines (13) before entering via connecting duct (3) into an extremely large containing tank (12) wherein the air is compressed (14), driving air turbines (11) before being exhausted to the atmosphere.
During a dropping tide a reverse process occurs allowing the sea water contained within the containing structure (A) to exhaust back through the water turbines (18) into the sea. The partial vacuum created drives the air turbines.

## Description

### Field of proposed invention

The proposed invention concerns one single unit of a coastal defence system containing within its structure a mechanical content designed to generate electricity by the using of the motive power generated by the rising and the dropping of the tides.

### Background of the proposed invention

The energy generated by tidal flows has been used by man for millennia, from the ancient Greeks who hung their sails beneath their ships in order that the tidal flow carried them through the Straights of Gibraltar in adverse wind conditions, to the use of tidal flows for centuries to power mill water wheels situated at the sides of estuaries.

In recent times the generation of electricity by tidal flow has been achieved by placing a propeller powered generator across the tidal flow both in estuaries and at sea, some ten or more metres below low tide level to enable shipping to pass over.

It is claimed that water turned propeller blades are approximately four times more efficient than air turned propeller blades of a similar dimension, due to the greater density of water causing less slippage around and between the blades. Even so, considerable slippage is unavoidable.

Tidal generation may also be achieved by the damming up of estuaries in order to ensure that all of the waters of the incoming and the outgoing tides have to pass through the water turbines situated in the base of the dam wall.

The latest forms of tidal generation include the "floating duck" principle, where a series of floating air filled tanks connected one to the other rise and fall by wave action thereby causing the joints between said tanks to flex and through a mechanical content within said tank to generate electricity.

Construction of a £42,000,000.00 "Wave Hub", ten miles off the coast of Cornwall has just commenced. The "wave hub" is a large grid connected socket on the sea bed that will allow four different marine energy devices to connect to it at any one time. The hub is connected to an electricity sub-station on land by undersea cable. Marine energy companies will be able to test up to four electricity generating devices by the use of the wave hub.

### Summary of the proposed invention

The function of the proposed invention is described and characterised in the main claim. The dependent claims describe other characterisations of the proposed invention.

The purpose of the proposed invention, as well as providing an efficient system of costal defence is to, through a combination of known technologies, to contain the waters produced by the rising and the dropping of tides within a confined structure, and, to achieve the maximum generative power from the movement of said waters in the passing inward and the passing outward of the confining structure.

Another purpose of the proposed invention is to achieve tidal generation by an essentially land based structure, thereby avoiding such difficulties as, undersea cables, underwater construction, underwater maintenance and the maintenance problems associated with adverse sea conditions.

A further purpose of the proposed invention is to generate significant and dependable amounts of electricity through large volume/low pressure turbines, with zero carbon emissions.

The proposed invention need not intrude into the marine environment thereby giving the advantages as set out in claims numbers 4, 5, 6, 8 and 13.

The proposed invention if linked with other similar structures along the European Sea Boards, and with the generated output of each structure fed into a European electrical grid system may be used to provide a considerable percentage of Europe's electricity requirements as set out in claims numbers 10 and 13.

The proposed invention is in the form of an extremely large reinforced concrete containing tank, which contains within a requisite number of generating chambers positioned at one end of said containing tank, a requisite number of water turbines each connected (in this example) to an electrical generator by its own individual drive shaft. Said turbines situated at the base of each generating chamber. The generating chambers are linked one to another, with all chambers being supplied in sequence with tidal sea water from (in this example) one single inlet/outlet duct at the base of the first chamber, with one other duct linking the last generating chamber to the extremely large remainder of the containing tank which holds the total amount of sea water used by the water turbines during or after a rising tide to be released back through the water turbines during or after the subsequent dropping tide.

Situated upon the reinforced concrete top of the containing tank, away from the generating chambers, are positioned a requisite number of air turbines supplied with alternating flows of compressed air during a rising tide and, partial vacuum created atmospheric air pressure, during a dropping tide, via (in this example) one singular air duct positioned appropriately in the reinforced concrete top of the otherwise air tight and water tight containing tank portion of the structure.

### Brief Description of Drawings

The drawings numbers 1 to 5 are in a schematic form and are not to scale.

### Drawing Number 1

Shows the main body of the structure together with the position of the air turbines, generating compartments, air vents, inlet/outlet door, service doors, aperture linking containing tank to air turbines, removable deck plates and direction of tidal flow. Drawing Number 1 also indicates one method of constructing the proposed invention upon or near the foreshore.

### Drawling Number 2

Shows a vertical section through the centre of one of the generating chambers. Detailing - the body of the generating chamber, with generators, air vent (to allow chamber to fill and empty), turbine vanes, floor plate, side plates, ceiling plate, bearings, removable deck plate, and drive shaft.

### Drawing Number 3

Shows a horizontal section through generating chambers.

Detailing - the water turbine compartments, flow separating walls, automatic flow doors, inlet/outlet door, water turbines, link door between water compartments and containing tank, baffle/filter box, side plates to turbine armature housing and direction of tidal flow.

### Drawing Number 4

Shows a vertical section through the water turbine compartments during a rising tide.

Detailing - the containing tank (hidden), inlet/outlet duct, turbine vanes, generators, baffle/filter box, removable deck plate, automatic flow doors, door to duct between containing tank and turbine compartments, position of high tide, low tide and the notional levels during a rising tide.

### Drawing Number 5

Shows a vertical section through the main body of the containing tank during a rising or dropping tide with the containing tank, rising or dropping water levels, increasing or decreasing volume of either partial vacuum or air pressure, pressure relief valves, air turbines, generators, and direction of air flow.

### Detailed description of one method of construction

Main body of structure with reference to Drawing Number 1.

### Showing:

An extremely large and fully enclosed reinforced concrete containing structure (Dr 1 - A) partitioned off at one end and further sub divided into a requisite number of generating compartments (Dr 1 - B) with each compartment containing its individual turbine installation and maintenance aperture (Dr 1 - D), with air vent (Dr 1 - E), and to supply all turbine chambers (in this example) a single tidal inlet/outlet duct (Dr 1 - F).

Situated in the flat top of this structure is the inlet/outlet aperture (Dr 1 - G) to operate air turbines (Dr 1 - H).

Positioned at adequate intervals along the base of the seaward wall of the containing tank (Dr 1 - A) are water tight sealed doors (Dr 1 - J) for the occasional removal of sediments at extra low tides.

### Details of water turbines with reference to Drawing Number 2

Designed with low profile turbine vanes for maximum efficiency and also designed for ease of maintenance, repair and replacement.

### Showing:

Multi vaned turbine armature (Dr 2 - K) attached to drive shaft (Dr 2 -0) passing through bearings (Dr 2 - P) with top bearing attached to removable deck plate (Dr 2 - R) with sectional armature housing comprising floor scaling plate (Dr 2 - L), side casings (Dr 2 - M) and upper sealing plate (Dr 2 -N).

Following removal of generator (Dr 2 - S) and deck plate (Dr 2 -R) the turbine may be removed through the deck plate (Dr 2 -R) aperture as a complete assemblage.

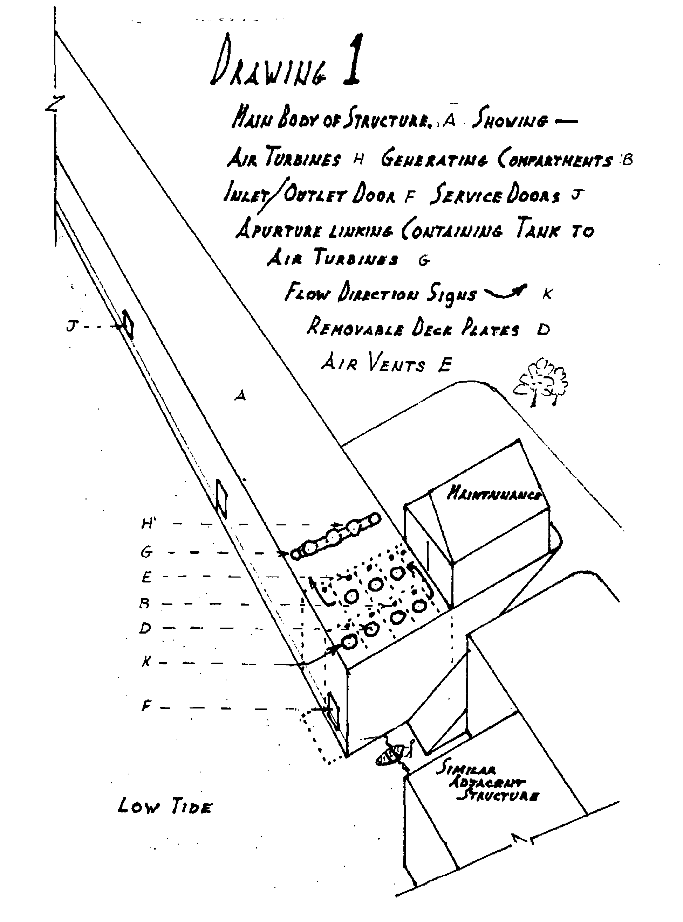

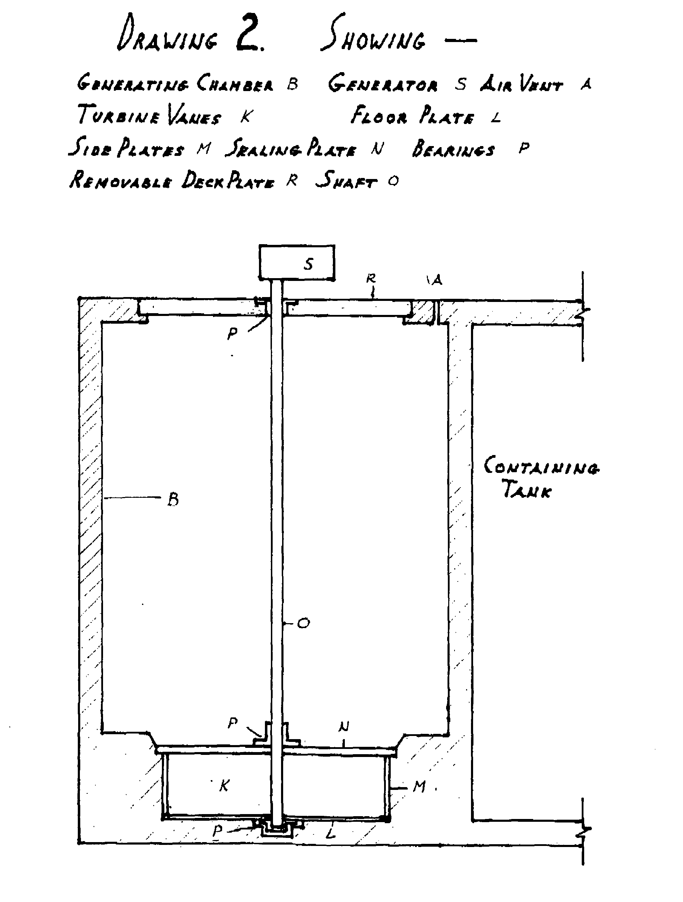

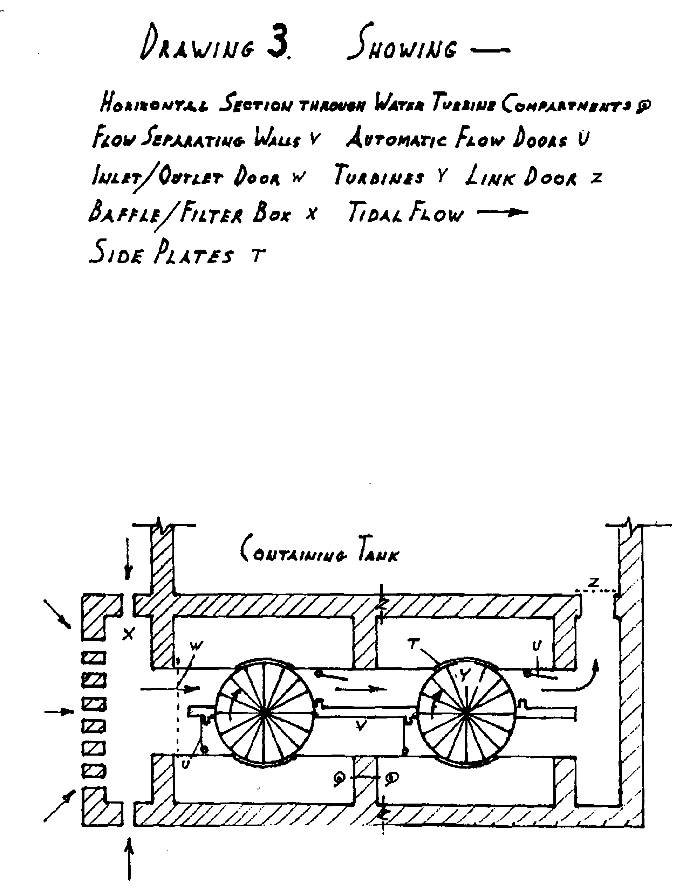

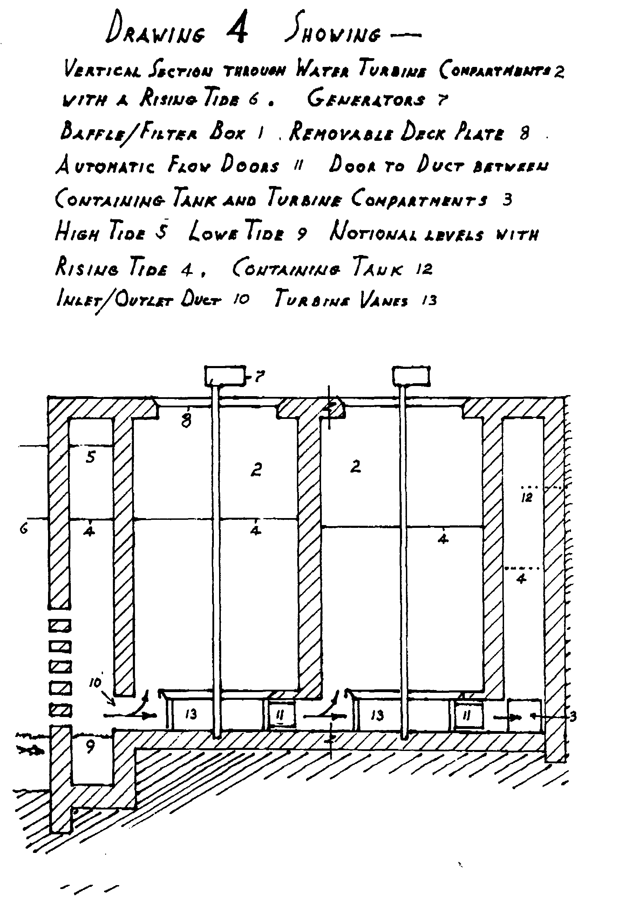

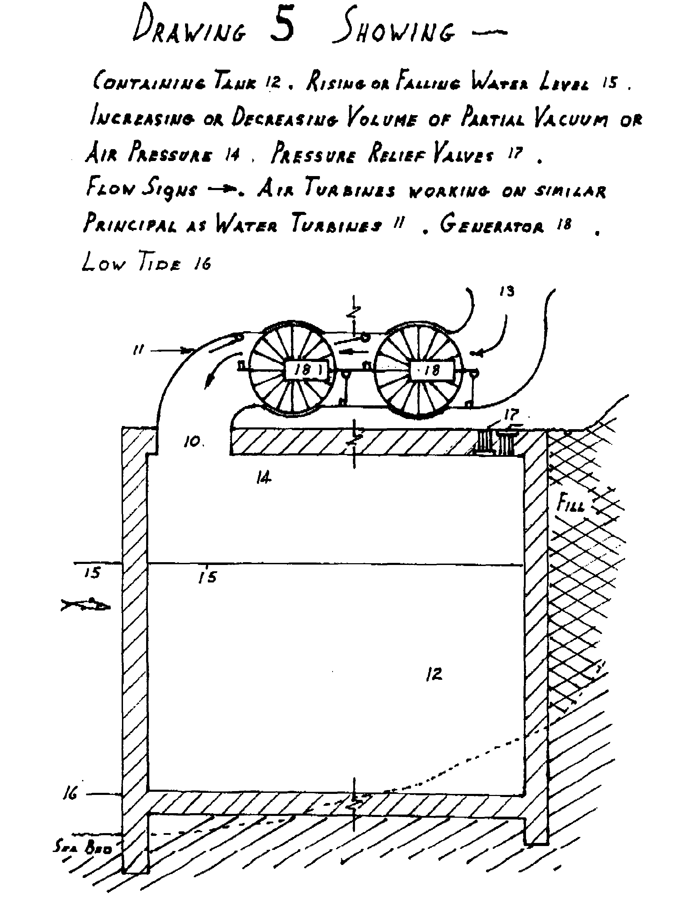

### Water turbine with reference to Drawing no 3

### Showing:

Side plates of sectional armature casing (Dr 3 - T). Free swinging automatic water tight flow doors (Dr 3 - U) in both open and closed positions. Flow separating walls (Dr 3 - V) between inlet and outlet channels. Powered water tight perpendicularly sliding door (Dr 3 - W) to control entry and exit of tides. Powered water tight perpendicularly sliding link door (Dr 3 - Z) to control waters contained within containing tank and generating chambers (Dr 3 - Q). Drawing 3 also shows a baffle/filter box (Dr 3 - X) to prevent storm damage to turbines (Dr 3 - Y) and to prevent larger pieces of debris floating on or under the sea water from entering the turbine chambers (Dr 3 - Q)

### Three methods of operation

### The average number of tidal movements within twenty four hours is four with two tides rising and with two tides dropping, with a relatively stationery or still period of approximately one hour at both high and at low tides.

### Method 1

### Sequence of events regarding the water turbines during a rising tide

### With reference to Drawing Numbers 4 and 2

At low tide (Dr 4 -9) everything is still, as the tide rises water flows through the entrance duct (Dr 4 - 10), begins to fill the first compartment (Dr 4 - 2), then acts upon the first turbine (Dr 4 - 13). The water then having passed through the first turbine (Dr 4 -13) enters the second compartment (Dr 4 - 2) and proceeds to act upon the second turbine (Dr 4 -13) and begins to fill the third compartment (Dr 4 - 2) and so on to the last of the required number of turbines (Dr 4 -13). As each compartment (Dr 4 - 2) fills, its maintains its own individual head of water pressure (Dr 4 - 4) thereby creating an accumulating effect. This allows one entrance of water at (Dr 4 - 10) to act upon a required number of turbines (Dr 4 - 13) one after another with each turbine producing electricity via generators (Dr 4 - 7).

After acting upon the last turbine (Dr 4 - 13) the water flows into the extremely large containing tank (Dr 4 -12) via the link duct (Dr 4 - 3). As the floor area of the containing tank (Dr 4 -12) is extremely greater than that of the combined floor areas of the turbines compartments (Dr 4 - 2), the rate of water level rise in the containing tank (Dr 4 - 12) will be much slower than in the turbine compartments (Dr 4 - 2), this will increase the efficiency of the turbines (Dr 4 -13).

Once the tide has risen fully (Dr 4 - 5) the tide then remains still for approximately one hour before beginning to drop. This still period allows the imbalance between the levels in the containing tank (Dr 4 -12) and the turbine compartments (Dr 4 - 2) to become equalized with the fully risen tide (Dr 4 -5). Generation continues until the end of the still period.

### Sequence of events regarding air turbines during a rising tide

### With reference to Drawing Number 5

The requisite number of air turbines (Dr 5 - 11) are positioned upon the flat top of the containing tank (Dr 5 -12). As the water level within the containing tank (Dr 5 -12) rises due to the incoming tide air pressure is increased within the containing tank (Dr 5 -14). The air at low pressure (Dr 5 - 14) is expelled through aperture (Dr 5 - 10) and thence through a requisite number of air turbines (Dr 5 - 11 ) causing the electrical generators (Dr 5-18) to produce electricity. The final turbine exhausts to the atmosphere (Dr 5 -13). Generation continues until the end of the still period allowing the containing tank (Dr 5 - 12) to completely fill .
(The air turbines have to operate at a lower pressure than the water turbines).

### Sequence of events regarding water turbines during a droping tide

### With reference to Drawing Number 4 and 5

The tide begins to drop and a reverse process begins. (As both air turbines (Dr 5 -11 ) and water turbines (Dr 4 - 13) are double acting the same directional turning motion is maintained, allowing the electrical generators (Dr 4 - 7) to continue to turn in the same direction with both rising and dropping tides). This now dropping tide causes an opposite imbalance between water levels in the containing tank (Dr 4-12) and the water turbine compartments (Dr 4 - 2). Now the level in the containing tank (Dr 4 - 12) will (due to its vast volume) drop more slowly than in the turbine compartments (Dr 1 2) once more creating greater efficiency. At low tide (Dr 4 - 9) there will be an approximate one hour of stillness once more allowing the imbalance between levels within the containing tank (Dr 4 - 12) and turbine compartments (Dr 4 - 2) to equalize with the external sea level. Generation continues until the end of the still period.

### Sequence of events regarding air turbines during a dropping tide

### With reference to Drawing Numbers 3, 4 and 5

With a dropping tide a partial vacuum (Dr 5 -14) is created within the containing tank (Dr 5 - 12) causing air at atmospheric pressure (Dr 5 - 13) to travel back through the air turbines (Dr 5 *-*11*)* causing generators (Dr 5 - 18) to produce electricity until the end of the still period at low tide (Dr 5 - 16).

(Note: The periods of still water at high and low tides will allow both air and water turbines to generate for most of a twenty four hour period by the careful control of the loads imposed by the electrical generators and/or the control over the entrance duct door Dr 3 - W).

### Method 2

### Sequence of events regarding both water and air turbines with both rising and drooping tides

### With reference to Drawings Numbers 1, 3, 4 and 5.

This method enables the rising tide to generate in the same manner as in Method 1. However, as soon the rising tide reaches its full height (Dr 4 - 5) then the control door (Dr 3 - W) at the entrance duct (Dr 1 - F) is closed. The containing tank (Dr 5 -12) and the turbine compartments (Dr 4 - 2) remain full of water until the tide reaches a low but predetermined level (Dr 5 -16). The entrance door (Dr 3 - W) is then opened to allow the full benefit of the differing of levels of water in the containing tank (Dr 5-12) and the water level at low tide (Dr 5 -16) to act upon both water (Dr 4 -1 3) and air turbines (Dr 5 -11 ). The predetermined time to open the entrance duct door (Dr 1 - F) will ensure that the containing tank (Dr 5 - 12) will finally empty at the end of the approximately one hour period of stillness at low tide (Dr 5 -16), allowing the imminent next rising tide to commence its process without delay.

(**Note:** This method has the benefit of flushing out any debris in and around the water turbines).

### Method 3

(This method relies upon the use of the inlet/outlet door (Dr 3 - W).)

### Sequence of events regarding both water and air turbines for a rising tide

### With reference to Drawings Numbers 2, 3, 4 and 5

At the end of the period of stillness at low tide (Dr 4 - 9) the inlet/outlet door (Dr 3 - W) is closed, the tide then rises to a high but predetermined level (Dr 4 - 6) then the inlet/outlet door (Dr 3 -W) is opened to allow the sea water to enter the generating compartments (Dr 4 - 2) via entrance duct (Dr 4 - 10) with air within the generating compartments (Dr 4 - 2) being expelled through air vents (Dr 2 -A ). The sea water then acts upon the water turbines (Dr 4 -13) which proceed to generate electricity via generator (Dr 4-7). The water then passes through the link duct (Dr 4 -3) into the containing tank (Dr 5 -12) via the link duct (Dr 4 - 3), as the containing tank (Dr 5-12) fills, with air at low pressure (Dr 5 - 14) being forced through the aperture (Dr 5- 10) and proceeding to turn air turbines (Dr 5 -11 ) which then generate electricity through generators (Dr 5 - 18). Spent air, is then exhausted through vent (Dr 5 - 13).

This process is regulated to continue until the end of the approximate one hour of still water at high tide (Dr 4 -5), by which time the water levels between high tide externally (Dr 4 - 5) and the water level within the containing tank (Dr 4 -12) will equalize. The inlet/outlet door (Dr 3 - W) is then closed trapping all of the water within the containing tank (Dr 5 - 12) and in the generating chambers (Dr 4 - 2). Generation continues until the end of the still period

(**Note:** The air turbines have to operate at a lower pressure than the water turbines).

### Sequence of events regarding both water and air turbines for a dropping tide

### With reference to Drawings Numbers 3, 4 and 5

With the inlet/outlet door (Dr 3 - W) having been closed at high tide (Dr 4 - 5) with the waters of the previous generation being trapped within the containing tank (Dr 5 - -12) the tide then proceeds to drop until reaching a low but predetermined level (Dr 4-9) then the inlet/outlet door (Dr 3 -W) is opened, the water contained within the containing tank (Dr 5 -12 ) then via the link duct (Dr 4 - 3) flows through the water turbines (Dr 4 -13) and their chambers (Dr 4 - 2) causing water turbines (Dr 4-13) and air turbines (Dr 5 - 11 ) to generate electricity through electrical generators (Dr 4 - 7) and (Dr 5 -18). The water then exhausts back into the sea through inlet/outlet door (Dr 3 - W) and baffle/filter box (Dr 3 - X).

The final emptying of the structure to coincide with the end of the approximate one hour period of stillness at low tide, in readiness for the imminent next rising tide to commence its process without delay.

### Method 4

### Sequence of events regarding both water and air turbines at the still period at low tide

### With reference to Drawings Numbers 2, 3, and 5

With the containing tank (Dr 5 -12) being constructed to contain the precise volume of water needed to efficiently drive water turbine vanes (Dr 2 - K) and air turbine (Dr 5 -11) for one hour at the still period at low tide by water contained from the last rising tide and with the requisite number of water turbines (Dr 3 - Y) being one in number. Then, at the still period at low tide the waters released from the containing tank (Dr 5 - 12) will complete total generation within the one hour of still period at low tide.

### Sequence of events regarding both water and air turbines at the still period at high tide

### With reference to Drawings Numbers 2, 3, and 5

With the inlet/outlet door (Dr 3 - W) having been closed at the end of the previous period of low tide then, at the beginning of the still period at high tide, inlet/outlet door (Dr 3 - W) is opened to allow the sea water to enter the singular generating chamber (Dr 2 - B) causing the water turbine vanes (Dr 2 - K) and air turbine (Dr 5 - 11 ) to generate for a period of one hour by which time the containing tank (Dr 5 - 12) will have completely filled.

Both high and low tides still periods will therefore deliver the very maximum generative output achievable from containing tank (Dr 5 - 12).

This method, even though generation may only take place for 1 hour in every 6 hours or for 4 hours in every 24 hours, will achieve a greater production of electricity within a 24 hour period than either Method 1, Method 2 or Method 3.

### Combined Methods

A combination of Methods 1, 2, 3 and 4 wherein a series of such structures (Dr 1 - A), may be used to generate into (in this example) a European Electrical Grid System.

Such combinations, due to the differing times of rising and dropping tides along the (in this example) western European Seaboard (including Europe's Western Islands of Britain and Ireland), allows for a constant and controllable generative system of electrical energy able to supplement Europe's requirements.

## Claims

1. As defined in Drawings Numbers 1, 2, 3, 4 and 5
A structure (Dr 1 - A) designed (in this example) in the form of a sea defence wall containing within (and/or upon) itself machinery able to generate electrical or mechanical power by utilising the motive power of the rising and the dropping of tidal flows.
The mechanical content of the structure (Dr 1 - A) enables the motive power of tidal flows to be controlled at doors (Dr 3 - W) and door (Dr 3 - Z) thereby allowing the turbines (Dr 3 -Y and Dr 5 - 11) to generate electricity through generators (Dr 4 - 7 and Dr 5 - 18).
The structure (Dr 1 - A) allows for the exclusion or inclusion of sea water by the use of door (Dr 3 - W) until the tide has reached a high or low predetermined level. This replication of high tide within the containing tank (Dr 5 - 12) at a period of actual low tide and the exclusion of the sea waters during a rising tide allows the maximum power of the contained waters at a high tide level to be employed upon the turbines from within the containing tank (Dr 5 -12) at a period of low tide and from without at a period of high tide. These replications are made possible by door (Dr 3 - W) door (Dr 3 - Z) and by the automatic opening and closing of the automatic flow doors (Dr 3 - U and Dr 4 -11 )
The structure is **characterised by** the bringing together of at least all of the known technologies defined in drawings no 1 - 5 into one single structure able to perform a number of functions **characterised in** the following dependant claims.

2. With reference to Drawings Numbers 1, 3, 4 and 5
The structure (Dr 1 - A) together with its mechanical content as defined in Claim 1 is **characterised in that** the use of door (Dr 3 - W) enables the structure (Dr 1 - A) to generate electricity from the power of the sea waters contained within the structure (Dr 1 - A) at high tide (Dr 4 - 5) at a period of actual low tide, and to generate electricity from the sea waters excluded from the structure (Dr 1 - A) during a rising tide being released into the structure (Dr 1 - A) at a period of actual high tide (Dr 4 - 5 ).

3. With reference to Drawings Numbers 1 and 5
The structure (Dr 1 - A) together with its mechanical contents as defined in Claim 1 is **characterised in that** it takes advantage of the approximately one hour of still water at high and at low tides to enable generation to continue during the still period due to the differing levels between high tide (Dr 4 - 5) and containing tank level (Dr 4 - 4) and the differing levels between low tide (Dr 4 - 9) and containing tank level (Dr 4 -4).

4. With reference to Drawings Numbers 1. 2 and 4)
The structure (Dr 1 - A) together with its generating capabilities as defined in Claim 1 is **characterised in** its ability to compound the benefits of the tidal flow by placing in sequence a line of water turbines (Dr 2 - K) each in their own compartments (Dr 4 -2 ) containing their own heads of water (Dr 4 - 4) and with air turbines (Dr 1 - F) also in sequence (in this example) thereby creating an accumulation of power from (in this example) one singular inlet/outlet duct (Dr 1 - F).

5. With regard to Drawing Number 1
The structure (Dr 1 - A) together with its generating capabilities as defined in Claim 1 is **characterised in that** it is an essentially land based structure designed to harness the power of the rising and the dropping of tidal flows.

6. With reference to Drawing Number 1
The structure (Dr 1 - A) together with its generating capabilities as defined in Claim 1 is **characterised in that** the structure (Dr 1 - A) despite being powered by tidal flows causes no hazard or **i**nconvenience to shipping or damage to the sea bed.

7. With regard to Drawing Number I
The structure (Dr 1 - A) together with its generating capabilities as defined in Claim 1 is **characterised by** its ability, once constructed, to produce electricity or other forms of power with no adverse ecological effects such as carbon emissions or harm to the marine environment.

8. With reference to Drawings Numbers 1, 2 and 4
The structure (Dr I - A) together with its generating capabilities as defined in Claim 1 is **characterised in that** the water turbine vanes (Dr 2 - K) will receive due to the provision of a baffle box (Dr 4 - 1 ) together with its filtering capability being constructed before the inlet/outlet duct (Dr 1 - F).

9. With reference to Drawings Numbers 1 and 3
The structure (Dr 1- A) together with its generating capabilities as defined in Claim 1 is **characterised by** being designed for maximum ease of maintenance in that at certain low tides when the sea level is at or below the level of the structure (Dr 1 - A) then inlet/exit door (Dr 3 - W) and link door (Dr 3 - Z) maybe closed and maintenance work carried out in dry conditions. Ease of maintenance is further emphasised in that in case of emergency then both doors (Dr 3 - W and Z) may be closed at any state of tide and a whole assemblage may be lifted out en bloc for repair or replacement. Once whole turbine assemblage has been removed then doors (Dr 3 -W and Z) may be reopened and generation continued by the remaining turbines whilst repairs are in progress.

10. With regard to Drawing Number 1
The structure (Dr 1 - A) together with its generating capabilities as defined in Claim 1 is **characterised in that** the containing tank (Dr 1- A) may be divided into several units, each in relatively close proximity and linked by flexible ducts, in order to avoid the detrimental effects of ground movement and temperature differentials.

11. With regard to Drawing Number 1
The structure (Dr I - A) together with its generating capabilities as defined in Claim 1 is **characterised in that** when replicated with similar structures appropriately positioned along a seaboard may deliver a constant and controllable means of generating electricity due to the differing times of tidal movements along said seaboard.

12. With regard to Drawing Numbers 1 and 5
The structure (Dr 1 - A) together with its generating capabilities as defined in Claim 1 is **characterised by** the ability to position air turbines (Dr 1 - H) at any appropriate distance in land of the main structure (Dr 1 - A) by piping the pressurized air (Dr 5 - 14) from the structure (Dr 1 - A) to perform any required function of power generation.

13. With reference to Drawings Numbers 1, 2 and 5
The structure (Dr 1 - A) together with its generating capabilities as defined in Claim 1 is **characterised by** the structure's ability to harness either or all of three forms of motive power within one confined structure:
Form 1:
The power of water pressure acting upon water turbine vanes (Dr 2 - K)
Form 2:
The power of compressed air acting upon air turbine raws (Dr 5 -11 )
Form 3:
The power created by a partial vacuum (Dr 5 - 14) causing air at atmospheric pressure to act upon air turbine vanes (Dr 5 -11)

14. With reference to Drawing Number 1
The structure (Dr 1 - A) together with its generating capabilities as defined in Claim 1 is **characterised by** its ability to be of any appropriate length, width or shape on plan, making it ideally versatile for use not only for coastal defence but, for example, also in the construction of harbours, quays, artificial reefs, artificial islands, artificial capes or land reclamation. The structure (Dr 1- A) in other configurations on plan is capable of being beneficially employed where any other large scale coastal construction is contemplated.

15. With reference to Drawing Number 1
The structure (Dr 1 - A) together with its generating capabilities as defined in Claim 1 is **characterised in that** although the initial expense of construction would be, due to its extremely large dimensions, expensive, more so in a very long and narrow configuration such as (in this example) in the form of a coastal defence wall, which in order to contain an appropriate volume of water would require much more length of containing tank (Dr 1 - A) walls to achieve a given volume than would be the case (for example) in a circular artificial island or cape which would be the ultimate configuration regarding "length of containing wall per volume of containment". However, as reinforced concrete of a high quality may last for 100 years or more with little or no maintenance then the initial cost of construction can, over time, be at least off set by the value of electricity produced together with the financial benefits of coastal protection.
